# EUROPÄISCHE PATENTANMELDUNG

(11) **EP 4 328 091 A1**
(43) Veröffentlichungstag der Anmeldung: **28.02.2024**
(21) Anmeldenummer: 22191935.0
(22) Anmeldetag: 24.08.2022
(51) Int. Cl.: B60R 13/08, B62D 29/00

(54) **SYSTEM EINES GEDÄMMTEN DURCHGANGS**

(71) Anmelder: Sika Technology AG, 6340 Baar (CH)
(72) Erfinder: Lindgren, Henrik, 7181 Feluy (BE); Cousin, Henri, 59493 Villeneuve d'Ascq (FR); Munzinger, Noah, 8047 Zürich (CH); Klingler, Philipp, 8805 Richterswil (CH)
(74) Vertreter: Sika Patent Attorneys

(57) **Zusammenfassung**

Ein System eines gedämmten Durchgangs in einem elektrisch angetriebenen Kraftfahrzeug umfasst einen Durchgang, welcher einen ersten Bereich (9) mit einem zweiten Bereich (10) verbindet, wobei der erste Bereich hin zu einer Batterie des Kraftfahrzeugs luftdurchlässig ist und wobei der zweite Bereich hin zu einer Fahrgastzelle des Kraftfahrzeugs luftdurchlässig ist. Das System umfasst zudem ein Dämmelement (2), welches ein expandiertes Material (4) umfasst, wobei das expandierte Material den Durchgang gegen den ersten Bereich hin verschliesst, und wobei das expandierte Material ein einkomponentige hitzegehärtete Epoxidharzzusammensetzung ist.

## Beschreibung

Die Erfindung betrifft ein System eines gedämmten Durchgangs, und insbesondere ein System eines gedämmten Durchgangs in einem elektrisch angetriebenen Kraftfahrzeug.

In elektrisch angetriebenen Kraftfahrzeugen stellt sich neben der üblichen akustischen Dämmung zusätzlich das Problem, dass ein Innenraum des Kraftfahrzeugs geschützt werden muss für Fälle einer Fehlfunktion der Antriebsbatterie. Wenn die Batterie des elektrisch angetriebenen Kraftfahrzeuges thermisch durchgeht, beziehungsweise in einer exothermen chemischen Reaktion überhitzt, werden giftige und sehr heisse Gase entwickelt. Diese giftigen heissen Gase müssen für eine gewisse minimale Zeit von der Fahrgastzelle des Kraftfahrzeugs ferngehalten werden, damit sich im Kraftfahrzeug befindliche Insassen rechtzeitig in Sicherheit bringen können.

Es ist daher eine Aufgabe der vorliegenden Erfindung, eine Vorrichtung zur Verfügung zu stellen, welche es erlaubt, thermische giftige heisse Gase, welche bei einem thermischen Durchgehen der Batterie eines elektrisch angetriebenen Kraftfahrzeugs entstehen, von der Fahrgastzelle fernhalten zu können.

Diese Aufgabe wird gelöst durch ein System eines gedämmten Durchgangs in einem elektrisch angetriebenen Kraftfahrzeug, das System umfassend: einen Durchgang, welcher einen ersten Bereich mit einem zweiten Bereich verbindet, wobei der erste Bereich hin zu einer Batterie des Kraftfahrzeugs luftdurchlässig ist und wobei der zweite Bereich hin zu einer Fahrgastzelle des Kraftfahrzeugs luftdurchlässig ist; und ein Dämmelement, welches ein expandiertes Material umfasst, wobei das expandierte Material den Durchgang gegen den ersten Bereich hin verschliesst; wobei das expandierte Material eine geschäumte und zumindest teilweise ausgehärtete Epoxidharzzusammensetzung ist.

Diese Lösung hat zunächst den Vorteil, dass im Automobilbau bereits bekannte Materialien verwendet werden können, um diesem neuen Einsatzzweck gerecht zu werden. Epoxidbasierte Zusammensetzungen, welche auf diese Art und Weise unter Hitzeeinwirkung expandiert werden, werden oftmals zur Verstärkung von Karosserieabschnitten eingesetzt. Diese Materialien weisen eine sehr hohe mechanische Belastbarkeit in einem expandierten und ausgehärteten Zustand auf. Oftmals werden solche Materialien als verstärkende Klebstoffe oder auf Englisch "expanding reinforcer material", "reinforcer foam", "reinforcer material" oder "expanding adhesives" bezeichnet.

Somit besteht ein Vorteil der hier vorgeschlagenen Lösung darin, dass bewährte und bekannte Materialien zur Lösung der eingangs gestellten Aufgabe verwendet werden können. Beispielsweise müssen solche Materialien bei den Automobilbauern nicht erneut freigegeben werden, wodurch Kosten und Aufwand eingespart werden können.

Die hier vorgeschlagene Lösung bietet weiterhin den Vorteil, dass durch die Verwendung eines expandierbaren Materials eine einfache und effiziente Dämmung eines Durchgangs ermöglicht wird. Solche hier vorgeschlagenen Dämmelemente können in einem nicht expandierten Zustand in die Karosserie eingebaut werden und werden dann im Zuge der Lackbeschichtung der Karosserie in einem Ofen expandiert und ausgehärtet. Somit ist eine Handhabung, Installation und Planung solcher Dämmelemente einfach und kostengünstig.

Die Bezeichnung "Dämmelement" beziehungsweise "Dämmung" beziehungsweise "gedämmt" umfasst im Zusammenhang mit dieser Erfindung Elemente beziehungsweise Strukturen oder Verfahrensschritte zur Abschottung und/oder Verschliessung und/oder Dämmung eines Durchgangs. Die verschiedenen Eigenschaften eines solchen Dämmelements können dabei einzeln oder aber in Kombination miteinander auftreten.

In einer beispielhaften Ausführungsform ist der Durchgang kanalförmig ausgebildet.

In einer beispielhaften Ausführungsform ist der Durchgang durch Seitenwände, welche einen Hohlraum umgeben, gebildet.

In einer alternativen Ausführungsform ist der Durchgang lochförmig ausgebildet. Dabei ist der Durchgang insbesondere durch eine Öffnung in einer Wand gebildet.

In einer beispielhaften Ausführungsform ist vom Dämmelement zum ersten Bereich hin nur expandiertes Material exponiert.

Eine solche Anordnung von expandiertem Material bietet den Vorteil, dass dadurch die gehärtete Epoxidharzzusammensetzung einen wirksamen Schutzschild bildet gegenüber den von der durchgehenden Batterie kommenden giftigen und heissen Gasen. Es hat sich nämlich in Experimenten gezeigt, dass viele andere Materialien einer solchen Belastung nicht genügend lange standhalten. Somit ist es von Vorteil, wenn nur dieses beständige expandierte Material dem heissen Gas ausgesetzt ist, und keine anderen Bestandteile des Dämmelementes (wie beispielsweise Abschnitte eines Trägers oder Ähnliches).

In einer beispielhaften Ausführungsform hat das expandierte Material eine Schichtdicke, gemessen in einer Richtung entlang einer Hauptdurchgangsachse des Durchgangs, zwischen 1 und 50 mm. Bevorzugt beträgt diese Schichtdicke zwischen 2 und 30 mm, besonders bevorzugt zwischen 5 und 20 mm.

In Experimenten hat sich nämlich gezeigt, dass eine gewisse Schichtdicke erforderlich ist, um der Belastung durch das heisse Gas genügend lange zu widerstehen. In Versuchen wurde eine oberste Schicht des gehärteten Epoxidharzzusammensetzung während einer Belastung durch das heisse Gas verkohlt, jedoch blieben darunterliegende Schichten der gehärteten Epoxidharzzusammensetzung intakt. Somit muss eine genügend dicke Schicht vorgesehen werden, um der Belastung durch das heisse Gas genügend lange widerstehen zu können.

In einer beispielhaften Ausführungsform hat das expandierte Material vor einer Expansion, d.h. das expandierbare Material, eine Schichtdicke, gemessen in einer Richtung entlang einer Hauptdurchgangsachse des Durchgangs, zwischen 1 und 10 mm. Bevorzugt beträgt diese Schichtdicke zwischen 2 und 7 mm, besonders bevorzugt zwischen 3 und 6 mm.

In einer beispielhaften Ausführungsform umfasst das Dämmelement zudem einen Träger.

Das Vorsehen eines Trägers bietet den Vorteil, dass das expandierte Material vor einer Expansion einfacher und genauer im Kraftfahrzeug positioniert werden kann.

In einer beispielhaften Weiterbildung ist der Träger als Folie ausgebildet. Insbesondere ist der Träger flexibel ausgebildet. In einer weiteren beispielhaften Ausführungsform kann der Träger aus Metall gebildet sein.

In einer alternativen Ausführungsform ist der Träger als steifer Träger ausgebildet, wobei der Träger insbesondere aus Kunststoff ausgebildet ist.

In einer beispielhaften Weiterbildung wurden Träger und expandiertes Material durch ein Zweikomponentenspritzgussverfahren hergestellt.

In einer beispielhaften Ausführungsform umfasst das Dämmelement keinen Träger.

Dies bietet den Vorteil, dass das Dämmelement dadurch kostengünstiger hergestellt werden kann, beispielsweise durch ein Extrusionsverfahren.

In einer beispielhaften Weiterbildung ist das Dämmelement durch einen Klebefilm an einer Struktur des Durchgangs befestigt.

Dies hat den Vorteil, dass das expandierbare Material vor einer Expansion im Bereich des Durchgangs positioniert werden kann.

In einer anderen beispielhaften Weiterbildung ist das Dämmelement durch einen Pushpin an einer Struktur des Durchgangs befestigt.

Auch diese Methode bietet den Vorteil, dass das expandierbare Material vor einer Expansion ohne Träger an einer gewünschten Position im Bereich des Durchgangs vorfixiert werden kann.

In einer beispielhaften Ausführungsform ist das System in einem Kraftfahrzeug ohne Verbrennungsmotor.

In einer alternativen Ausführungsform ist das System in einem Kraftfahrzeug mit elektrischem Antrieb und mit Verbrennungsmotor (insbesondere in einem Hybridfahrzeug).

Unter dem Begriff "Batterie des Kraftfahrzeugs" wird im Zusammenhang dieser Erfindung eine Batterie verstanden, welche dazu verwendet wird, einen elektrischen Antrieb mit Energie zu versorgen. Es wird ausdrücklich nicht eine Batterie gemeint, welche dazu verwendet wird, um einen Verbrennungsmotor zu starten.

### Expandiertes Material

In einem Verwendungszustand, das heisst ein System eines gedämmten Durchgangs, welches in einem fertigen Automobil vorliegt, liegt das ursprünglich expandierbare Material als expandiertes Material vor. Gewisse Eigenschaften dieses expandierten Materials lassen sich jedoch besser anhand eines Zustandes vor der Expansion beschreiben. Daher wird im Folgenden bei der näheren Beschreibung dieses Materials stellenweise auf das expandierte Material nach der Expansion, und stellenweise auf das expandierbare Material vor der Expansion Bezug genommen.

In einer beispielhaften Ausführungsform hat das expandierte Material ein um zwischen 50% und 1200% grösseres Volumen als vor einer Expansion. In einer bevorzugten Weiterbildung vergrössert sich das Volumen um zwischen 100 und 1000%, bevorzugt zwischen 200 und 800%.

In einer beispielhaften Ausführungsform ist das expandierte Material eine geschäumte und ausgehärtete Epoxidzusammensetzung.

In einer beispielhaften Ausführungsform ist das expandierte Material erhalten aus einer einkomponentigen hitzehärtenden Epoxidharzzusammensetzung.

In einer beispielhaften Ausführungsform lag das expandierte Material (3') vor einer Expansion als expandierbares Material (3) vor, welches folgende Zusammensetzung enthielt:
Einkomponentige hitzehärtende Epoxidharzzusammensetzung, umfassend
a) mindestens ein Epoxidharz A mit durchschnittlich mehr als einer Epoxidgruppe pro Molekül;
b) mindestens einen latenten Härter für Epoxidharze; und
c) mindestens ein physikalisches oder chemisches Treibmittel BA.

In einer beispielhaften Ausführungsform beträgt der Anteil des Epoxidharzes A mit durchschnittlich mehr als einer Epoxidgruppe pro Molekül 30 - 90 Gew.- %, 35 - 85 Gew.- %, 40 - 75 Gew .- %, stärker bevorzugt 45-60 Gew.- %, bezogen auf das Gesamtgewicht der wärmehärtbaren Einkomponenten-Epoxidharzzusammensetzung.

In einer beispielhaften Ausführungsform ist das Epoxidharz **A** ein festes Epoxidharz.

In einer beispielhaften Ausführungsform umfasst die einkomponentige hitzehärtende Epoxidharzzusammensetzung zudem
d) mindestens einen Zähigkeitsverbesserer **D.**

In einer beispielhaften Ausführungsform ist der Zähigkeitsverbesserer **D** ausgewählt aus der Gruppe bestehend aus endständig blockierten Polyurethanpolymeren **D1,** Flüssigkautschuken **D2** und Kern-Schale-Polymeren **D3.**

In einer beispielhaften Ausführungsform ist der latente Härter ausgewählt aus Dicyandiamid, Guanaminen , Guanidinen , Aminoguanidinen und Derivaten davon, substituierten Harnstoffen , Imidazolen und Aminkomplexen, vorzugsweise Dicyandiamid.

In einer beispielhaften Ausführungsform umfasst die einkomponentige wärmehärtbare Epoxidharzzusammensetzung weiterhin mindestens einen Füllstoff **F,** ausgewählt aus der Gruppe, bestehend aus Calciumcarbonat, Calciumoxid, Talk, Glasfasern, und pyrogene Kieselsäuren, bevorzugter Talk, Glasfasern und pyrogene Kieselsäuren.

In einer beispielhaften Ausführungsform umfasst die einkomponentige wärmehärtbare Epoxidharzzusammensetzung weiterhin mindestens eine flammhemmende Komponente **G.** Insbesondere ist die flammhemmende Komponente **G** ausgewählt aus der Liste bestehend aus Ammoniumphosphat, Ammoniumpyrophosphat, Ammoniumpolyphosphat, Melaminphosphat, Magnesiumsulfat und Borsäure, vorzugsweise Ammoniumpolyphosphat.

Vorzugsweise weist das Ammonium-polyphosphat eine Partikelgrösse von ≤ 100 µm, insbesondere 50 µm - 5 µm, auf.

Der Gesamtanteil der flammhemmenden Komponente **G** beträgt vorteilhafterweise 3-50 Gew.-%, vorzugsweise 5-40 Gew.-%, 8-35 Gew.-%, bezogen auf das Gesamtgewicht der Epoxidharzzusammensetzung.

Es ist weiter vorteilhaft, wenn es sich bei dem Ammoniumpolyphosphat um ein Ammoniumpolyphosphat der Formel (NH4PO3)n mit n von 200 - 2000 bevorzugt 600 - 1500, handelt.

In einer beispielhaften Ausführungsform beträgt der Anteil des Treibmittels **BA** 0,1-10 Gew.-%, vorzugsweise 0,5-5 Gew.-%, insbesondere 1-3 Gew.-%, bezogen auf das Gesamtgewicht der Epoxidharzzusammensetzung.

Die Epoxidharzzusammensetzung ist einkomponentig, was bedeutet, dass die Bestandteile der Epoxidharzzusammensetzung, insbesondere das Epoxidharz und der Härter, in einer Komponente vorliegen, ohne dass eine Aushärtung bei üblicher Umgebungs- oder Raumtemperatur erfolgt. Es kann daher in dieser Form gehandhabt werden, während bei zweikomponentigen Systemen die Komponenten erst unmittelbar vor der Anwendung gemischt werden können.

Die Aushärtung der einkomponentigen Epoxidharzzusammensetzung erfolgt durch Erhitzen, typischerweise bei einer Temperatur von mehr als 70°C, beispielsweise im Bereich von 100 bis 220°C.

Die Vorsilbe "poly" in Ausdrücken wie Polyol oder Polyisocyanat bedeutet, dass die Verbindung zwei oder mehr der genannten Gruppen aufweist. Ein Polyisocyanat ist beispielsweise eine Verbindung mit zwei oder mehr Isocyanatgruppen.

Der im Folgenden verwendete Ausdruck "unabhängig voneinander" bedeutet, dass in demselben Molekül zwei oder mehrere gleich bezeichnete Substituenten definitionsgemäß gleiche oder unterschiedliche Bedeutungen haben können.

Die gestrichelten Linien in den Formeln dieses Dokuments repräsentieren jeweils die Bindung zwischen dem betreffenden Substituenten und dem zugehörigen Rest des Moleküls.

Raumtemperatur bezieht sich hier auf eine Temperatur von 23°C, sofern nicht anders angegeben.

Die hitzehärtende einkomponentige Epoxidharzzusammensetzung enthält mindestens ein Epoxidharz A mit durchschnittlich mehr als einer Epoxidgruppe pro Molekül. Die Epoxidgruppe liegt vorzugsweise als Glycidylethergruppe vor.

Der Anteil des Epoxidharzes **A** mit durchschnittlich mehr als einer Epoxidgruppe pro Molekül beträgt vorzugsweise 30-90 Gew .- %, 35-85 Gew -.- % , 40-75 Gew.- %, besonders bevorzugt -45-60 Gew .- % , bezogen auf das Gesamtgewicht der hitzehärtenden einkomponentigen Epoxidharzzusammensetzung.

Das Epoxidharz **A** mit durchschnittlich mehr als einer Epoxidgruppe pro Molekül ist vorzugsweise ein flüssiges Epoxidharz oder ein festes Epoxidharz, besonders bevorzugt ein festes Epoxidharz. Der Begriff "festes Epoxidharz" ist dem Fachmann auf dem Gebiet der Epoxide sehr geläufig und wird im Gegensatz zu "flüssigen Epoxidharzen" verwendet. Die Glasübergangstemperatur von Festharzen liegt oberhalb der Raumtemperatur, so dass sie bei Raumtemperatur zu rieselfähigen Pulvern zerkleinert werden können. Bevorzugt sind mehr als 70 Gew.-%, besonders bevorzugt mehr als 80 Gew.-%, mehr als 90 Gew.-%, mehr als 95 Gew.-%, mehr als 98 Gew.-% des Epoxidharzes **A** ist ein festes Epoxidharz.

Bevorzugte Epoxidharze haben die Formel (II)

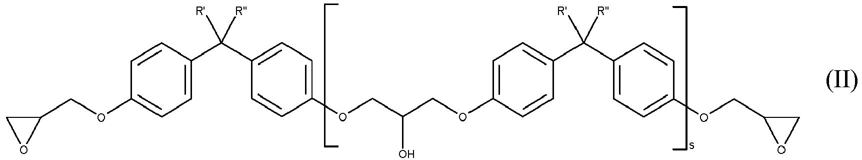

In dieser Formel bedeuten die Substituenten R' und R" unabhängig voneinander entweder H oder CH₃ .

Bei festen Epoxidharzen hat der Index s einen Wert von > 1,5, insbesondere von 2 bis 12.

Derartige feste Epoxidharze sind im Handel beispielsweise von Dow oder Huntsman oder Hexion erhältlich.

Verbindungen der Formel (II) mit einem Index s von 1 bis 1,5 werden vom Fachmann als halbfeste Epoxidharze bezeichnet. Sie gelten im Sinne der vorliegenden Erfindung ebenfalls als Festharze. Bevorzugte feste Epoxidharze sind jedoch Epoxidharze im engeren Sinne, das heisst bei denen der Index s einen Wert > 1,5 aufweist.

Bei flüssigen Epoxidharzen hat der Index s einen Wert kleiner 1. Vorzugsweise hat s einen Wert kleiner 0,2.

Daher handelt es sich vorzugsweise um Diglycidylether von Bisphenol A (DGEBA), von Bisphenol F sowie von Bisphenol A/F. Flüssigharze dieser Art sind beispielsweise als Araldite^{®} GY 250, Araldite^{®} PY 304, Araldite^{®} GY 282 (Huntsman) oder DER^{™} 331 oder DER^{™} 330 (Dow) oder Epikote 828 (Hexion) erhältlich.

Das Epoxidharz A ist vorzugsweise ein festes Epoxidharz der Formel (II).

Die hitzehärtende einkomponentige Epoxidharzzusammensetzung umfasst ferner mindestens einen latenten Härter für Epoxidharze. Latente Härter sind bei Raumtemperatur im Wesentlichen inert und werden durch erhöhte Temperatur aktiviert, typischerweise bei Temperaturen von 70°C oder mehr, wodurch die Härtungsreaktion initiiert wird. Es können die üblichen latenten Härter für Epoxidharze verwendet werden. Bevorzugt ist ein stickstoffhaltiger latenter Epoxidharzhärter.

Der latente Härter ist vorzugsweise ausgewählt aus Dicyandiamid, Guanaminen , Guanidinen , Aminoguanidinen und Derivaten davon, substituierten Harnstoffen , Imidazolen und Aminkomplexen, vorzugsweise Dicyandiamid.

Der latente Härter wird vorzugsweise in stöchiometrischer Menge bezogen auf die Epoxidgruppen in der Zusammensetzung eingesetzt. Das Molverhältnis der Epoxidgruppen zum aktiven Wasserstoff des latenten Härters beträgt vorzugsweise 0,8 bis 1,2, insbesondere 0,9 bis 1,1, vorzugsweise 0,95 bis 1,05.

Der Anteil des latenten Härters beträgt vorzugsweise 0,1 bis 15 Gew.- %, besonders bevorzugt 0,2 bis 5 Gew.- %, insbesondere 0,5-3 Gew.- %, bezogen auf das Gesamtgewicht der Epoxidharzzusammensetzung.

Die einkomponentige hitzehärtende Epoxidharzzusammensetzung enthält optional mindestens einen Zähigkeitsverbesserer **D.** Die Zähigkeitsverbesserer **D** können fest oder flüssig sein. Insbesondere ist der Zähigkeitsverbesserer **D** ausgewählt aus der Gruppe bestehend aus endständig blockierten Polyurethanpolymeren **D1,** Flüssigkautschuken **D2** und Kern-Schale-Polymeren **D3.**

Der Anteil an Zähigkeitsverbesserer **D** beträgt vorzugsweise 5-30 Gew.- %, besonders bevorzugt 7,5-20 -Gew.- %, bezogen auf das Gesamtgewicht der Epoxidharzzusammensetzung.

In einer bevorzugten Ausführungsform umfasst die einkomponentige hitzehärtende Epoxidharzzusammensetzung ferner mindestens einen Füllstoff F. Bevorzugt sind hier Glimmer, Talkum, Kaolin, Wollastonit, Feldspat, Syenit, Chlorit, Bentonit, Montmorillonit, Calciumcarbonat (gefällt oder gemahlen), Dolomit, Quarz, Kieselsäuren (geräuchert oder gefällt), Cristobalit, Calciumoxid, Aluminiumhydroxid, Magnesiumoxid, keramische Hohlperlen, Glashohlperlen, organische Hohlperlen, Glasperlen, Glasfasern und Farbpigmente. Besonders bevorzugt sind Füllstoffe ausgewählt aus der Gruppe bestehend aus Calciumcarbonat, Calciumoxid, Talk, Glasfasern und pyrogenen Kieselsäuren, stärker bevorzugt Talk, Glasfasern und pyrogenen Kieselsäuren.

Der Gesamtanteil des gesamten Füllstoffs **F** beträgt vorteilhafterweise 3-50 Gew.-%, vorzugsweise 5-40 Gew.-%, 8-35 Gew.-%, bezogen auf das Gesamtgewicht der Epoxidharzzusammensetzung.

Die einkomponentige hitzehärtende Epoxidharzzusammensetzung umfasst mindestens ein physikalisches oder chemisches Treibmittel **BA.**

Chemische Treibmittel sind organische oder anorganische Stoffe, die unter Einfluss von Temperatur, Feuchtigkeit, elektromagnetischer Strahlung oder Chemikalien gasförmige Stoffe bilden oder abspalten. Solche Stoffe sind insbesondere Azodicarbonamide , Sulfohydrazide , Hydrogencarbonate oder Carbonate. Als physikalische Treibmittel können Verbindungen eingesetzt werden, die beispielsweise bei Temperatur-, Druck- oder Volumenänderungen, insbesondere bei Temperaturerhöhung, in den gasförmigen Aggregatzustand übergehen und so durch Volumenausdehnung eine Schaumstruktur bilden. Solche physikalischen Treibmittel sind insbesondere Flüssigkeiten, die bei erhöhter Temperatur verdampfen. Weiterhin können als physikalische Treibmittel Gase oder niedrigsiedende Flüssigkeiten verwendet werden, die in mikroverkapselter Form in die Zusammensetzung eingebracht werden. Sowohl chemische als auch physikalische Treibmittel sind in der Lage, Schaumstrukturen in Polymerzusammensetzungen zu erzeugen.

Das mindestens eine physikalische oder chemische Treibmittel **BA** weist vorzugsweise eine Aktivierungstemperatur von 120 °C bis 220 °C, bevorzugt von 140 °C bis 200 °C auf.

Der Anteil des Treibmittels **BA** beträgt vorteilhafterweise 0,1-10 Gew.-%, vorzugsweise 0,5-5 Gew.-%, insbesondere 1-3 Gew.-%, bezogen auf das Gesamtgewicht der Epoxidharzzusammensetzung.

Eine besonders bevorzugte einkomponentige hitzehärtende Epoxidharzzusammensetzung umfasst:
- 30 - 90 Gew.- %, 35 - 85 Gew.- %, 40 - 75 Gew .- %, besonders bevorzugt 45 - 60 Gew.- %, bezogen auf das Gesamtgewicht der hitzehärtenden Epoxidharzzusammensetzung, des mindestens einen Epoxidharzes A im Mittel aufweist mehr als eine Epoxidgruppe pro Molekül;
- 0,1 bis 15 Gew.- %, besonders bevorzugt 0,2 bis 5 Gew.- %, insbesondere 0,5 - 3 Gew.- %, bezogen auf das Gesamtgewicht der hitzehärtenden Epoxidharzzusammensetzung, des mindestens einen latenten Härters für Epoxidharze, mehr insbesondere Dicyandiamid;
- 0,1-10 Gew.-%, vorzugsweise 0,5-5 Gew.-%, insbesondere 1-3 Gew.-%, bezogen auf das Gesamtgewicht der hitzehärtenden Epoxidharzzusammensetzung, des Treibmittels **BA;**
- bevorzugt 5 - 30 Gew.-%, vorzugsweise 7,5 - 20 Gew.-% mindestens eines Zähigkeitsverbesserers **D,** bezogen auf das Gesamtgewicht der hitzehärtenden Epoxidharzzusammensetzung;
- bevorzugt 5-40 Gew.-%, vorzugsweise 20-40 Gew.-%, bezogen auf das Gesamtgewicht der hitzehärtenden Epoxidharzzusammensetzung, eines Füllstoffs **F** ausgewählt aus der Gruppe bestehend aus Calciumcarbonat, Calciumoxid, Talkum, Glasfasern und pyrogenen Kieselsäuren, stärker bevorzugt Talkum, Glasfasern und pyrogene Kieselsäuren;
- optional 3-50 Gew.-%, vorzugsweise 5-40 Gew.-%, insbesondere 8-35 Gew.-%, bezogen auf das Gesamtgewicht der hitzehärtenden Epoxidharzzusammensetzung, mindestens einer flammhemmenden Komponente **G** ausgewählt aus der Liste bestehend aus Ammoniumphosphat, Ammoniumpyrophosphat, Ammoniumpolyphosphat, Melaminphosphat, Magnesiumsulfat und Borsäure, vorzugsweise Ammoniumpolyphosphat.

Weiterhin kann es vorteilhaft sein, wenn die bevorzugte einkomponentige hitzehärtende Epoxidharzzusammensetzung zu mehr als 80 Gew.-%, vorzugsweise zu mehr als 90 Gew.-%, insbesondere zu mehr als 95 Gew.-%, besonders bevorzugt zu mehr als 98 Gew.-%, bezogen auf das Gesamtgewicht der Epoxidharzzusammensetzung, aus den vorgenannten Bestandteilen besteht.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung eines Durchgangs;
- Fig. 2: eine beispielhafte Darstellung eines Durchgangs mit darin angeordnetem Dämmelement; und
- Fig. 3a bis 6b: beispielhafte Darstellungen von Systemen gedämmter Durchgänge.

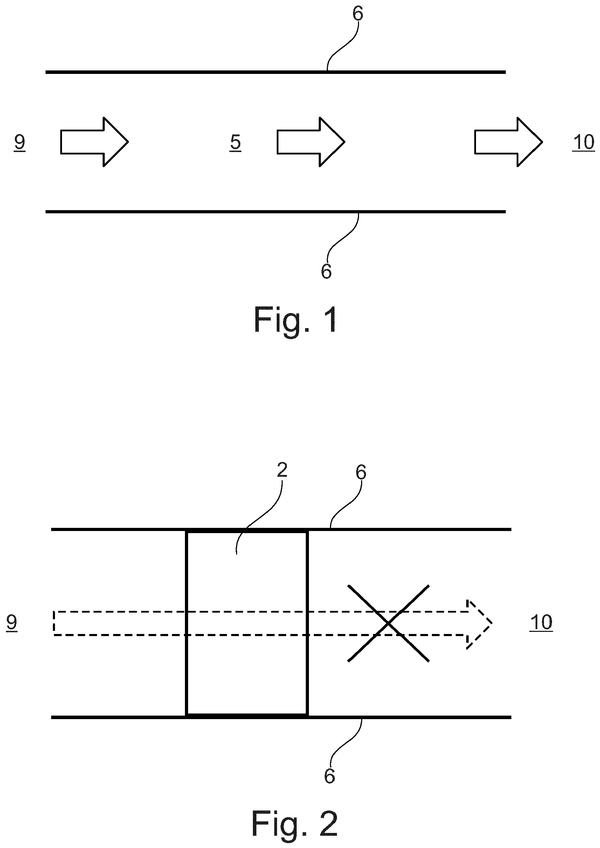

In Fig. 1 ist beispielhaft ein Durchgang 5 in einem elektrisch angetriebenen Kraftfahrzeug dargestellt. Dabei verbindet der Durchgang 5 einen ersten Bereich 9 mit einem zweiten Bereich 10. Der erste Bereich 9 ist hin zu einer Batterie des Kraftfahrzeugs luftdurchlässig, und der zweite Bereich 10 ist hin zu einer Fahrgastzelle des Kraftfahrzeugs luftdurchlässig. In diesem Ausführungsbeispiel ist der Durchgang 5 als kanalförmiger Durchgang ausgebildet, wobei Seitenwände 6 einen Hohlraum umgeben. Zudem ist mit Pfeilen angegeben, in welche Richtung sich heisses und giftiges Gas ausbreitet im Falle eines thermischen Durchgehens der Batterie des Kraftfahrzeugs.

In Fig. 2 ist wiederum ein Durchgang 5 in einem elektrisch angetriebenen Kraftfahrzeug dargestellt. In Fig. 2 ist nun jedoch dieser Durchgang 5 durch ein Dämmelement 2 gedämmt. Dieses Dämmelement 2 verhindert demnach, dass sich heisse und giftige Gase vom ersten Bereich 9 hin zum zweiten Bereich 10 ausbreiten können. Dies ist in dieser Figur mit einem gestrichelten und durchgestrichenen Pfeil dargestellt.

Beispielhafte und mögliche Ausführungsformen solcher Dämmelemente 2 sind nun schematisch und unvollständig in den nachfolgenden Figuren dargestellt. Dabei ist für jedes Ausführungsbeispiel das System 1 einmal in einem Zustand vor einer Expansion des expandierbaren Materials 3 dargestellt sowie auch nach der Expansion des expandierbaren Materials 3. Die Systeme 1 nach Expansion, also mit dem expandierten Material 3', werden jeweils als System 1' bezeichnet.

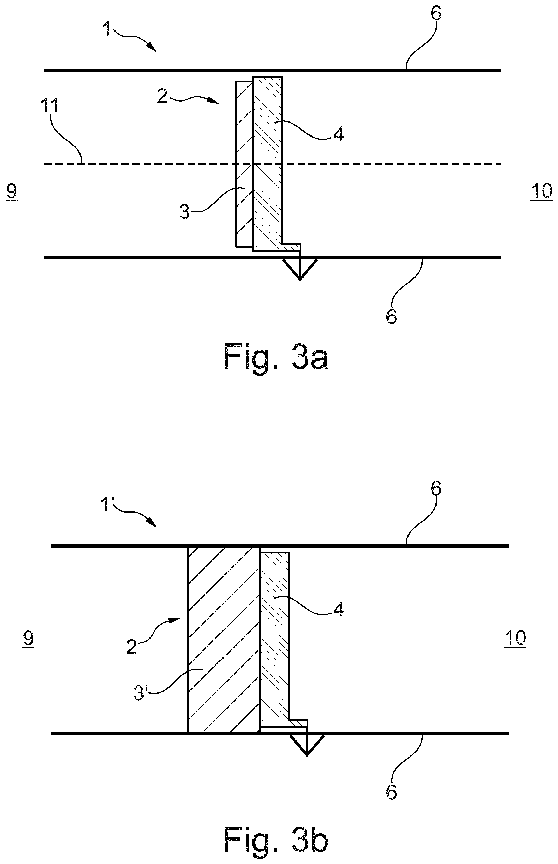

In den Fig. 3a und 3b ist ein erstes beispielhaftes System 1 beziehungsweise 1' dargestellt. In diesem Ausführungsbeispiel ist der Durchgang 5 wiederum kanalförmig mit Seitenwänden 6 ausgebildet. Das Dämmelement 2 ist dabei derart in diesem Durchgang positioniert, dass das expandierte Material 3' den Durchgang verschliesst. Dabei ist das expandierte Material hin zum ersten Bereich 9 orientiert. In diesem Ausführungsbeispiel umfasst das Dämmelement 2 sowohl expandierbares Material 3 beziehungsweise expandiertes Material 3' als auch einen Träger 4. Dieser Träger 4 hat in diesem Ausführungsbeispiel zudem einen Clip, welcher eine Positionierung im Bereich des Durchgangs vereinfacht.

In Fig. 3a ist eine Hauptdurchgangsrichtung 11 durch den Durchgang 5 hindurch eingezeichnet. In diesem Ausführungsbeispiel verläuft diese Hauptdurchgangsrichtung 11 im Wesentlichen parallel zu den Seitenwänden 6.

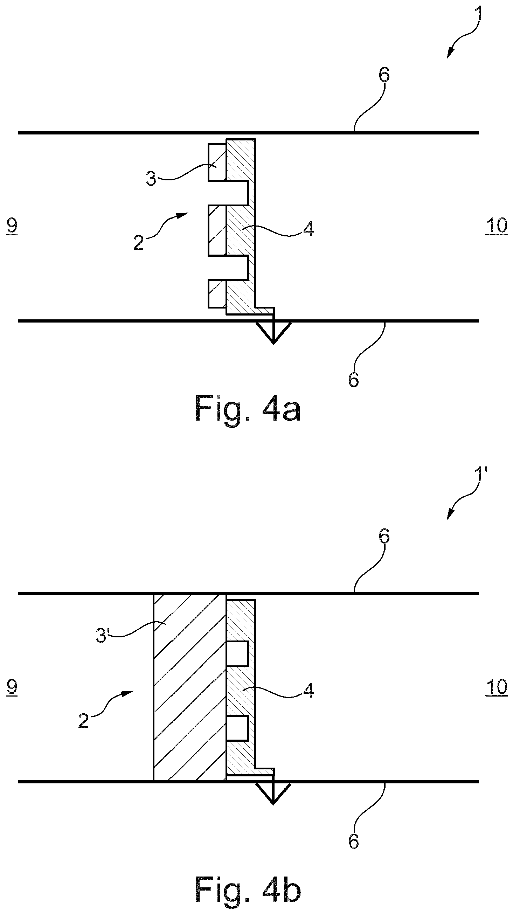

In den Fig. 4a und 4b ist ein weiteres Beispiel eines Systems 1 beziehungsweise 1' eines gedämmten Durchgangs dargestellt. Im Unterschied zum Ausführungsbeispiel der Fig. 3a und 3b bilden sowohl Träger 4 als auch expandierbares Material 3 vor einer Expansion des Materials keine durchgehende Oberfläche auf der Seite des ersten Bereichs 9. Aus Fig. 4b ist jedoch ersichtlich, dass im Verwendungszustand des Systems 1' das expandierte Material 3' den Durchgang 5 gegen den ersten Bereich 9 hin vollständig verschliesst. Dadurch wird die Dämmungswirkung des Dämmelements 2 gegen heisse und giftige Gase vollständig erfüllt.

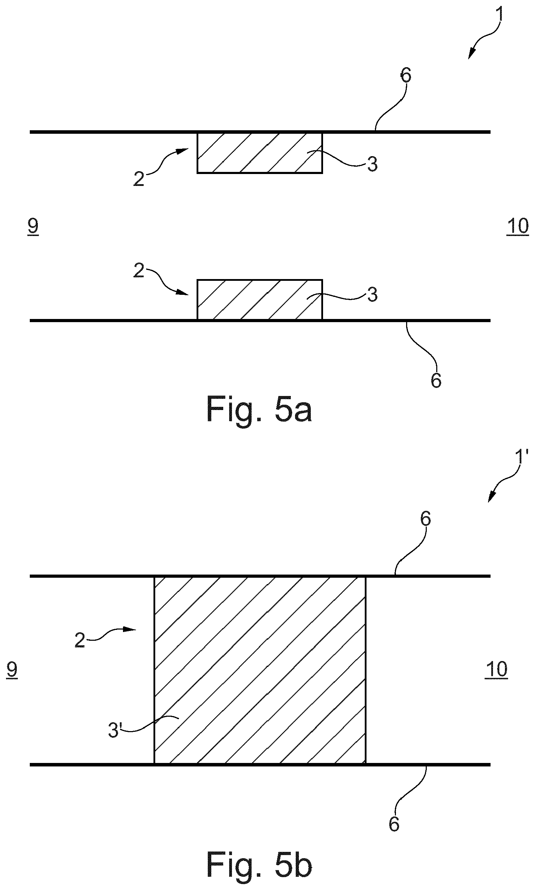

In den Fig. 5a und 5b ist nun ein Dämmelement 2 dargestellt, welches keinen Träger umfasst. Das Dämmelement 2 in diesem Ausführungsbeispiel wird durch eine Klebeschicht an einer Struktur im Bereich des Durchgangs 5 fixiert. Wiederum verschliesst das expandierte Material 3' den Durchgang 5 in einem Gebrauchszustand des Systems 1' vollständig.

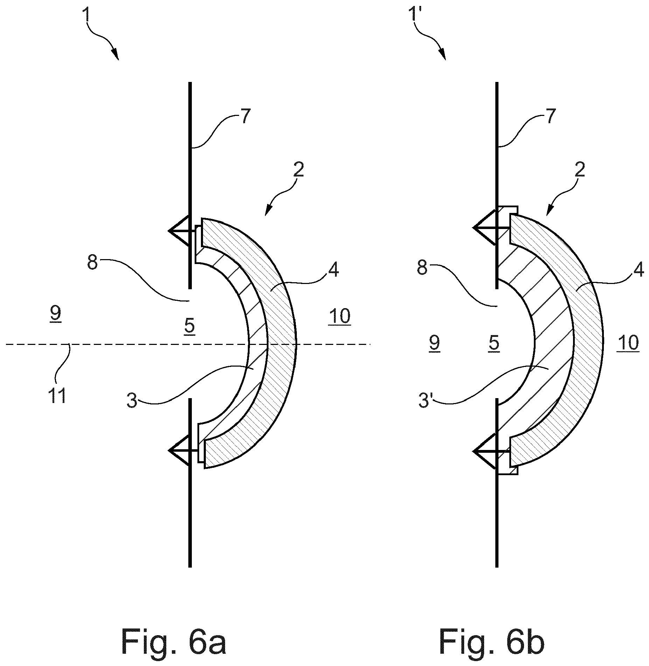

In den Fig. 6a und 6b ist schliesslich ein weiteres Ausführungsbeispiel eines Systems 1 beziehungsweise 1' dargestellt. In diesem Ausführungsbeispiel ist der Durchgang 5 lochförmig ausgebildet, wobei der Durchgang 5 durch eine Öffnung 8 in einer Wand 7 gebildet ist. In diesem Ausführungsbeispiel verläuft die Hauptdurchgangsrichtung 11 im Wesentlichen senkrecht zur Wand 7.

Hier umfasst das Dämmelement 2 wiederum einen Träger 4 und expandierbares Material 3 beziehungsweise expandiertes Material 3'. Nach einer Expansion des expandierbaren Materials 3 schliesst das expandierte Material den Durchgang 5 gegen den ersten Bereich 9, wie aus Fig. 6b ersichtlich.

### Bezugszeichenliste

- 1: System (vor einem Verwendungszustand)
- 1': System (in einem Verwendungszustand)
- 2: Dämmelement
- 3: expandierbares Material
- 3': expandiertes Material
- 4: Träger
- 5: Durchgang
- 6: Seitenwand
- 7: Wand
- 8: Öffnung
- 9: erster Bereich
- 10: zweiter Bereich
- 11: Hauptdurchgangsachse

## Patentansprüche

1. System (1') eines gedämmten Durchgangs (5) in einem elektrisch angetriebenen Kraftfahrzeug, das System (1') umfassend:
einen Durchgang (5), welcher einen ersten Bereich (9) mit einem zweiten Bereich (10) verbindet, wobei der erste Bereich (9) hin zu einer Batterie des Kraftfahrzeugs luftdurchlässig ist und wobei der zweite Bereich (10) hin zu einer Fahrgastzelle des Kraftfahrzeugs luftdurchlässig ist; und
ein Dämmelement (2), welches ein expandiertes Material (3') umfasst, wobei das expandierte Material (3') den Durchgang (5) gegen den ersten Bereich (9) hin verschliesst;
wobei das expandierte Material (3') eine geschäumte und zumindest teilweise ausgehärtete Epoxidharzzusammensetzung ist.

2. System (1') nach Anspruch 1, wobei der Durchgang (5) kanalförmig ausgebildet ist, und/oder wobei der Durchgang (5) durch Seitenwände (6), welche einen Hohlraum umgeben, gebildet ist.

3. System (1') nach Anspruch 1, wobei der Durchgang (5) lochförmig ausgebildet ist, und/oder wobei der Durchgang (5) durch eine Öffnung (8) in einer Wand (7) gebildet ist.

4. System (1') nach einem der vorhergehenden Ansprüche, wobei vom Dämmelement (2) zum ersten Bereich (9) hin nur expandiertes Material (3') exponiert ist.

5. System (1') nach einem der vorhergehenden Ansprüche, wobei das expandierte Material (3') eine Schichtdicke, gemessen in einer Richtung entlang einer Hauptdurchgangsachse (11) des Durchgangs (5), zwischen 1 und 50 mm hat.

6. System (1') nach einem der vorhergehenden Ansprüche, wobei das expandierte Material (3') ein um ein zwischen 50% und 1200% grösseres Volumen hat als vor einer Expansion.

7. System (1') nach einem der vorhergehenden Ansprüche, wobei das expandierte Material (3') vor einer Expansion als expandierbares Material (3) vorlag, welches folgende Zusammensetzung enthielt:
Einkomponentige hitzehärtende Epoxidharzzusammensetzung, umfassend
a) mindestens ein Epoxidharz **A** mit durchschnittlich mehr als einer Epoxidgruppe pro Molekül;
b) mindestens einen latenten Härter für Epoxidharze; und
c) mindestens ein physikalisches oder chemisches Treibmittel **BA.**

8. System (1') nach einem der vorhergehenden Ansprüche, wobei das Dämmelement (2) einen Träger (4) umfasst.

9. System (1') nach Anspruch 8, wobei der Träger (4) als Folie ausgebildet ist und/oder wobei der Träger (4) flexibel ausgebildet ist und/oder wobei der Träger (4) aus Metall gebildet ist.

10. System (1') nach Anspruch 8, wobei der Träger (4) als steifer Träger ausgebildet ist, und/oder wobei der Träger (4) aus Kunststoff ausgebildet ist.

11. System (1') nach Anspruch 10, wobei Träger (4) und expandiertes Material (3') durch ein Zweikomponentenspritzgussverfahren hergestellt wurden.

12. System (1') nach einem der Ansprüche 1 bis 7, wobei das Dämmelement (2) keinen Träger (4) umfasst.

13. System (1') nach Anspruch 12, wobei das Dämmelement (2) durch einen Klebefilm an einer Struktur des Durchgangs (5) befestigt ist.

14. System (1') nach Anspruch 12, wobei das Dämmelement (2) durch einen Pushpin an einer Struktur des Durchgangs (5) befestigt ist.

15. System (1') nach einem der vorhergehenden Ansprüche, wobei das System (1) in einem Kraftfahrzeug ohne Verbrennungsmotor ist.
